# EUROPÄISCHE PATENTSCHRIFT

(11) **EP 2 619 057 B1**
(45) Veröffentlichungstag und Bekanntmachung des Hinweises auf die Patenterteilung: **15.11.2017**
(21) Anmeldenummer: 11757595.1
(22) Anmeldetag: 12.09.2011
(51) Int. Cl.: B60T 15/30, B60T 15/24

(54) **PNEUMATISCHES STEUERVENTIL MIT MEHREREN C-KOLBEN**
PNEUMATIC CONTROL VALVE COMPRISING SEVERAL C-PISTONS
SOUPAPE DE COMMANDE PNEUMATIQUE COMPORTANT PLUSIEURS PISTONS C

(30) Priorität: 20.09.2010 EA 201001385
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); KRUSCHE, Michael, 80802 München (DE); SIMON, Timm, 80636 München (DE); HELLER, Martin, 85716 Unterschleißheim (DE); PETTER, Thomas, 80336 München (DE)
(74) Vertreter: Schönmann, Kurt
(86) Internationale Anmeldenummer: PCT/EP2011/065715
(87) Internationale Veröffentlichungsnummer: WO 2012/038278

(56) Entgegenhaltungen:
- US-A- 2 940 799

## Beschreibung

Die vorliegende Erfindung betrifft ein pneumatisches Steuerventil als Stellglied für eine geregelte Druckluftbeaufschlagung mindestens eines an einem Ventilgehäuse über einen C-Port anschließbaren Bremszylinders nach Maßgabe einer Druckdifferenz zwischen einem per S-Port zugeführten Steuerdruck und per A-Port zugeführten entgegengesetzt auf einen Steuerkolben wirkenden Referenzdruck, der im Zusammenwirken mit mindestens einer Druckfeder ein Doppelsitzventil betätigt, um entweder zur Entlüftung den C-Port mit einem O-Port oder zur Belüftung den C-Port mit einem R-Port zu verbinden, wobei mehrere zusätzliche mit dem Steuerkolben zusammenwirkende alternativ auswählbare C-Kolben zur Einstellung mehrerer Bremsdruckniveaus vorgesehen sind.

Das Einsatzgebiet der vorliegenden Erfindung erstreckt sich auf den Schienenfahrzeugbau. Im Rahmen der bei Schienenfahrzeugen gewöhnlich zum Einsatz kommenden pneumatischen Bremsanlagen werden pneumatisch vorgesteuerte Steuerventile als Stellglieder eingesetzt. Die Stellglieder steuern je die Füllung der Hilfsluftbehälter oder Vorratsluftbehälter und regeln einen Bremszylinder- oder Vorsteuerdruck aus. Die vorliegende Erfindung ist den mehrlösigen Steuerventilen zugeordnet. Die Steuerventile für pneumatische Bremsanlagen sind je nach Einsatzzweck gewöhnlich kombiniert mit Höchstdruckbegrenzern, Füllstoßschutz, Beschleunigungseinrichtungen und dergleichen. Ein Steuerventil bildet das zentrale Bremssteuerorgan jeder indirekt wirkenden selbsttätigen Einkammerdruckluftbremse, dessen Aufgabe darin besteht, in Abhängigkeit einer in der Hauptluftleitung herbeigeführten Druckänderung das Be- und Entlüften des angeschlossenen Bremszylinders entweder direkt oder als Vorsteuerdruck für ein zwischengeschaltetes Relaisventil zu steuern.

Aus der Produktbeschreibung "Lokomotiv-Steuerventile-Reihe LST100" (Werkzeugmaschinenfabrik OERLIKON-BÜHRLE AG, Schweiz, Drucknr. WBQ 70059 DFE, Ausgabe 1982) geht ein gattungsgemäßes pneumatisches Steuerventil als Stellglied für eine pneumatische Bremsanlage hervor. Das Steuerventil umfasst einen durch die Druckdifferenz zwischen Steuerdruck und Referenzdruck betätigbaren Steuerkolben, von dem aus eine hohle Kolbenstange ausgeht, die endseitig ein Doppelsitzventil zum Be- oder Entlüften eines am Steuerventil anschließbaren Bremszylinders aufweist, indem ein C-Port am Ventilgehäuse des Steuerventils zur Entlüftung mit einem O-Port oder zur Belüftung über einen R-Port mit einem Vorratsluftbehälter verbunden wird. Wird in der den Steuerdruck für den Steuerkolben bestimmenden Hauptluftleitung zum Zwecke einer Bremsung der Druck reduziert, so entsteht gegenüber dem Referenzdruck eine Druckdifferenz, welche den Druck der ebenfalls auf die Steuerkolben einwirkenden Druckfeder überwindet. In Folge dessen hebt die hohle Kolbenstange mit dem Belüftungsventilsitz ab, um Druckluft aus dem Vorratsluftbehälter über das nunmehr geöffnete Einlassventil in den Bremszylinder zu leiten. Das Steuerventil umfasst weiterhin auch zwei axial beabstandet an der Kolbenstange angebrachte C-Kolben, welche hier als Membrankolben ausgebildet sind. In Wirkrichtung der auf den Steuerkolben über die Kolbenstange einwirkenden Druckfeder wirkt auch der aktuell anliegende Bremszylinderdruck auf diese C-Kolben.

Hat dieser Wert einen Druck erreicht, der zur auf den Steuerkolben wirkenden Druckdifferenz äquivalent ist, bewegt sich die Kolbenstange wieder so weit zurück, dass das Einlassventil in die Abschlussstellung gelangt. Durch stufenweises Herabsetzen des Hauptleitungsdrucks wiederholt sich dieser Vorgang bis zur Erreichung der Vollbremsung, so dass beliebige Bremsstufen erzeugt werden können. Über die beiden C-Kolben lassen sich also mehrere Bremsdruckniveaus realisieren.

Daneben ist dem Steuerventil auch ein Höchstdruckbegrenzer zugeordnet, der im Prinzip nach Art eines Rückschlagventils funktioniert und in einem separaten Ventilgehäuseteil untergebracht ist. Die Druckmittelverbindung zum eigentlichen Steuerventil sowie zu den externen Anschlüssen erfolgt über einen diverse Druckmittekanäle enthaltenen Verteilerblock.

Nachteilhaft bei dem bekannten Steuerventil ist, dass sich mit den beiden C-Kolben auch nur zwei verschiedene Bremsdruckniveaus einstellen lassen, so dass dieses Steuerventil nur zwei verschiedene Lastzustände beherrschen kann. Ferner ist der Höchstdruckbegrenzer hier schaltungstechnisch recht kompliziert aufgebaut und nimmt in der Gesamtkonfiguration ein eigenes Ventilteil in Anspruch.

Aus der US 2 940 799 A ist ein Steuerventil mit drei unterschiedlich großen C-Kolben bekannt. Je zwei C-Kolben begrenzen eine C-Kammer. Indem nun entweder keine, oder nur die erste C-Kammer, oder aber beide C-Kammern mit Bremszylinderdruck beaufschlagt werden, können drei verschiedene Bremsdruckniveaus gewählt werden.

Es ist daher die Aufgabe der vorliegenden Erfindung, ein pneumatisches Steuerventil der gattungsgemäßen Art dahingehend weiter zu verbessern, dass sich in konstruktiv einfacher Weise mehr als zwei Bremsdruckniveaus einstellen lassen.

Die Aufgabe wird ausgehend von einem pneumatischen Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung geht davon aus, dass an der das Doppelsitzventil des pneumatischen Steuerventils betätigenden Kolbenstange ein erster C-Kolben kleineren Durchmessers mit zugeordnetem C1-Port beabstandet von einem zweiten C-Kolben größeren Durchmessers mit zugeordnetem C2-Port angeordnet ist, wobei ein erstes Bremsdruckniveau durch Beaufschlagung des ersten C-Kolbens mit Bremszylinderdruck, ein zweites Bremsdruckniveau durch Beaufschlagung des zweiten C-Kolbens mit Bremszylinderdruck und ein drittes Bremsdruckniveau durch Beaufschlagung beider C-Kolben mit Bremszylinderdruck einstellbar ist.

Erfindungsgemäß ist zum Auswählen eines der Bremsdruckniveaus ein Umstellerventil zum Zu- und Abschalten einzelner Teilflächen der C-Kolben vorgesehen.

Der Vorteil der erfindungsgemäßen Lösung liegt insbesondere darin, dass durch nur zwei C-Kolben drei verschiedene Bremsdruckniveaus einstellbar sind, also auf drei verschiedene Lastniveaus des Schienenfahrzeuges - wie leer, mittel beladen, voll beladen - bremstechnisch reagiert werden kann, um eine optimale Bremsung herbeizuführen. Im Rahmen der erfindungsgemäßen Lösung ist es natürlich denkbar, durch entsprechende Vervielfältigung des Erfindungsgedankens eine entsprechend höhere Anzahl einstellbarer Bremsdruckniveaus zu realisieren. Da die Erfindung die Flächendifferenz der beiden C-Kolben zur Einstellung eines dritten Bremsdruckniveaus nutzt, kann ein ansonsten üblicher dritter C-Kolben eingespart werden, was insgesamt zu einem vereinfachten konstruktiven Aufbau des Steuerventils führt.

Das Umstellerventil lässt sich beispielsweise nach Art eines 3/3-Wege-Schieber-Ventil ausbilden, welches die vorgenannte Schaltfunktion nach Maßgabe der Stellung eines innenliegenden Ventilschiebers realisiert. Zu diesem Zweck ist das Umstellerventil vorzugsweise eingangsseitig am C-Port zur Bereitstellung des Bremszylinderdrucks angeschlossen und die drei Schaltstellungen zur Umsetzung der drei Bremsdruckniveaus werden durch ausgangsseitigen Anschluss an den C1-Port und C2-Port des Steuerventils hergestellt. Im Prinzip werden durch das Umstellerventil verschieden große Wirkflächen der C-Kolben - inklusive einer Differenz-Ringfläche - ausgewählt, um eine ventilinterne Rückstellung für die verschieden großen Bremszylinderdrücke zu erreichen. Mit anderen Worten wird die Wirkfläche des sich aufbauenden Bremszylinderdrucks über das Umstellerventil durch Zu- und Abschalten einzelner Teilflächen in mehreren Stufen verändert.

Die vorstehend beschriebene Wirkungsweis wird vorzugsweise durch eine spezielle konstruktive Anordnung und Beaufschlagung der C-Kolben erzielt, indem der C1-Port des ersten C-Kolbens in derselben Wirkrichtung beaufschlagt wird, wie der über den S-Port zugeführte Steuerdruck den Steuerkolben beaufschlagt. Über den C2-Port wird der zwischen den beiden C-Kolben gebildete Raum beaufschlagt, wogegen an der verbleibenden Seite des zweiten C-Kolbens normaler Umgebungsdruck anliegt. Durch diese Kolbenkonfiguration sowie Druckluftbeschaltung wird ein kompakter Gesamtaufbau erzielt, der sich platzsparend innerhalb des Steuerventils integrieren lässt.

Gemäß einer die Erfindung verbessernden Maßnahme wird vorgeschlagen, dass zur Höchstdruckbegrenzung des Bremszylinderdrucks in jedem der unterschiedlichen Bremsdruckniveaus der Steuerkolben über eine Druckfeder mit der das Doppelsitzventil endseitig betätigenden und die C-Kolben tragenden Kolbenstange verbunden ist. Vorzugsweise wird die diese gemeinsame Höchstdruckbegrenzung verwirklichende Druckfeder in einem am Steuerkolben angeordneten Käfig untergebracht, so dass diese mit der Stirnseite am Steuerkolben zur Anlage kommt. Die andere Stirnseite der Druckfeder wirkt dagegen mit einer Anschlagplatte zusammen, von welcher die Kolbenstange ausgeht, und die sich in Richtung Doppelsitzventil zur Betätigung desselben erstreckt. Mit anderen Worten ist in den Kraftfluss zwischen Steuerkolben zum Doppelsitzventil die besagte Druckfeder in Reihe geschaltet und wirkt insoweit als Höchstdruckbegrenzer. Der Vorteil dieser Anordnung liegt insbesondere darin, dass zur Höchstdruckbegrenzung des Bremszylinderdrucks in den einzelnen Stellungen nur eine einzige Druckfeder erforderlich ist, die einfedert, sobald eine bestimmte Kraft von der Kolbenstange übertragen wird. Diese Kraft entspricht einer zur Vollbremsung benötigten Druckdifferenz des Steuerdrucks zum Differenzdruck am Steuerkolben. In den unterschiedlichen Stellungen wird diese Kraft von unterschiedlichen Bremszylinderdrücken entsprechend dem Übersetzungsverhältnis Bremszylinderdruck /(Referenzdruck - Steuerdruck) eingestellt. Durch das Nachgeben der Druckfeder wird die Kolbenstange nach unten gedrückt und das Einlassventil des Doppelsitzventils trennt die Verbindung zwischen dem Vorratsdruck und dem Bremszylinderdruck. Damit kann der Bremszylinderdruck nicht weiter steigen. Die Wirkung der Höchstdruckbegrenzung ist damit nicht von der Schaltstellung des vorstehend erwähnten Umstellerventils abhängig sondern lediglich von der durch die Kolbenstange übertragenden Kraft und damit von der Druckdifferenz zwischen Referenzdruck und Steuerdruck.

Gemäß einer diese Höchstdruckbegrenzung verbessernden Maßnahme wird vorgeschlagen, dass zusätzlich eine im Steuerkolben eingeschraubte Einstellschraube vorgesehen ist, die am steuerkolbenseitigen Ende auf die Druckfeder wirkt. Hierüber lässt sich die Druckbegrenzung manuell einstellen. Vorzugsweise ist die Einstellschraube von dem den Referenzdruck enthaltenen Raum des Ventilgehäuses her zugänglich, nachdem eine das Ventilgehäuse an dieser Stelle abdichtende Verschlusskappe entfernt worden ist. Alternativ dazu ist es jedoch auch denkbar, die Einstellschraube abgedichtet aus dem Ventilgehäuse heraus zu führen, um eine bessere Zugänglichkeit zu ermöglichen. Hierbei sind jedoch technische Maßnahmen zu ergreifen, die eine ungewollte Betätigung der Einstellschraube verhindern.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Fig.1 einen schematischen Längsschnitt eines pneumatischen Steuerventils mit mehreren C-Kolben, und
Fig.2 ein Diagramm zur Veranschaulichung mehrerer mit dem Steuerventil, nach Fig.1 einstellbarer Bremsdruckniveaus.

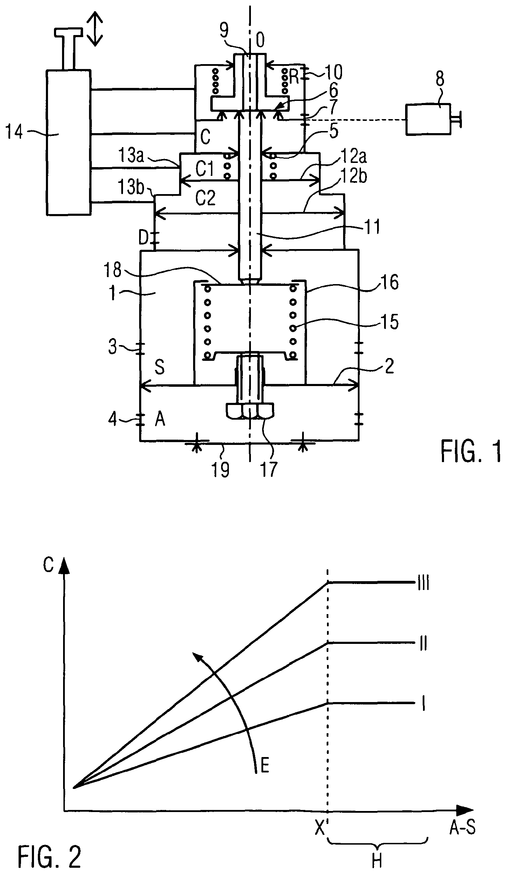

Gemäß Fig. 1 ist innerhalb eines Ventilgehäuses 1 eines Steuerventils ein Steuerkolben 2 angeordnet. Der Steuerkolben 2 wird einerseits von einem per S-Port 3 zugeführten Steuerdruck und andererseits von einem per A-Port 4 zugeführtem entgegengesetzt wirkenden Referenzdruck beaufschlagt. Der zwischen dem Steuerdruck und dem Referenzdruck entstehende Differenzdruck wirkt als Kraft auf den Steuerkolben 2, der im Zusammenhang mit einer ebenfalls hierauf einwirkenden Druckfeder 5 ein Doppelsitzventil 6 betätigt. Zur Entlüftung eines an einen C-Port 7 des Steuerventils angeschlossenen Bremszylinders 8 verbindet das Doppelsitzventil einen mit der Umgebung verbundenen O-Port 9 mit dem C-Port 10. Zur Belüftung des über den C-Ports 10 angeschlossenen Bremszylinders 8 stellt das Doppelsitzventil 6 in einer anderen Schaltstellung die Verbindung mit einem R-Port 10 her, über welchen der Vorratsdruck zugeführt wird.

Räumlich zwischen dem Steuerkolben 2 und dem Doppelsitzventil 9 sind an einer dazwischen als Betätigungsorgan verlaufenden Kolbenstange 11 zwei einander beabstandet angeordnete C-Kolben 12a und 12b befestigt. Die beiden C-Kolben 12a und 12b werden über einen C1-Port 13a bzw. C2-Port 13b mit Bremszylinderdruck beaufschlagt, um durch Einstellung eines Kräftegleichgewichts eine Rückstellung des Doppelsitzventils 9 in die Abschlussstellung zu bewirken.

Die unterschiedlich großen C-Kolben 12a und 12b werden über ein Umstellerventil 14 derart mit Bremsdruckniveau beaufschlagt, dass einzelne Teilflächen der C-Kolben 12a und 12b zu- oder abschaltbar sind. Zur Einstellung eines ersten Bremsdruckniveaus wird der C-Kolben 12a mit Bremszylinderdruck beaufschlagt, indem über das Umstellerventil 14 Bremszylinderdruck auf den C1-Port 13a gegeben wird. Ein zweites Bremsdruckniveau wird in analoger Weise durch Beaufschlagung des zweiten C-Kolbens 12b mit Bremszylinderdruck hergestellt. Ein drittes Bremsdruckniveau wird durch Beaufschlagung beider C-Kolben 12a und 12b mit Bremszylinderdruck eingestellt. Hierbei wird de facto die sich zwischen dem ersten C-Kolben 12a und dem zweiten C-Kolben 12b ergebende Differenzdruckfläche zur Wirkung gebracht. Dies wird erreicht, indem über den C1-Port 13a der erste C-Kolben 12a in entgegengesetzter Richtung beaufschlagt wird, wie der über den S-Port 3 zugeführte Steuerdruck den Steuerkolben 2 beaufschlagt. Der C2-Port 13b dient dagegen der Beaufschlagung des zwischen den beiden C-Kolben 12a und 12b gebildeten Raums, um die vorstehend erwähnte ringförmige Wirkfläche zu nutzen. Die verbleibende Seite des zweiten C-Kolbens 12b ist mit dem Umgebungsdruck verbunden.

Zur Höchstdruckbegrenzung des Bremszylinderdrucks in jedem der vorstehend beschriebenen unterschiedlichen Druckbremsniveaus ist der Steuerkolben 2 nicht direkt mit der das Doppelsitzventil 9 endseitig betätigenden und die C-Kolben 12a und 12b tragenden Kolbenstange 11 verbunden, sondern indirekt unter Zwischenschaltung einer Druckfeder 15. Am Steuerkolben 2 ist ein Käfig 16 angeordnet, in dem die Druckfeder 15 untergebracht ist, so dass diese mit einer Stirnseite am Steuerkolben 2 über eine Einstellschraube 17 zur Anlage kommt. An der anderen Stirnseite der Druckfeder 15 ist eine Anschlagplatte 18 vorgesehen, die mit einem randseitigen Absatz des Käfigs 16 zur Bildung eines Endanschlags zusammenwirkt und von der sich die Kolbenstange 11 aus in Richtung Doppelsitzventil 9 erstreckt.

Die vorstehend erwähnte Einstellschraube 17 ist in dem den Referenzdruck vom A-Port 4 enthaltenen Raum des Ventilgehäuses 1 untergebracht und von außen her über eine Verschlussklappe 18 zugänglich, so dass hierüber eine manuelle Verstellung zur Justierung der Druckbegrenzung erfolgen kann.

Die Fig.2 verdeutlicht die mit dem vorstehend beschriebenen Steuerventil realisierbaren drei verschiedenen Bremsdruckniveaus. Auf der senkrechten Achse ist der Bremszylinderdruck C angetragen und der sich zwischen dem Steuerdruck S und dem Referenzdruck A einstellenden Differenzdruck ist an der waagerechten Achse angetragen. Je nach Einstellung E des Steuerventils ergibt sich ein niedriger Bremszylinderdruck I, ein mittlerer Bremszylinderdruck II sowie ein hoher Bremszylinderdruck III. Dabei setzt ab einer maximalen Druckdifferenz X die Höchstdruckbegrenzung H ein.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, das Umstellerventil neben einem Schieberventil auch als Sitzventil auszubilden. Daneben lässt sich das erfindungsgemäße Prinzip auch auf die Einstellung mehrerer unterschiedlicher Bremsdruckniveaus abbilden.

### Bezugszeichenliste

- 1: Ventilgehäuse
- 2: Steuerkolben
- 3: S-Port
- 4: A-Port
- 5: Druckfeder
- 6: Doppelsitzventil
- 7: C-Port
- 8: Bremszylinder
- 9: Doppelsitzventil
- 10: R-Port
- 11: Kolbenstange
- 12: C-Kolben
- 13: C1/2-Port
- 14: Umstellerventil
- 15: Druckfeder
- 16: Käfig
- 17: Einstellschraube
- 18: Anschlagplatte
- 19: Verschlusskappe

- I: erstes Bremsdruckniveau
- II: zweites Bremsdruckniveau
- III: drittes Bremsdruckniveau
- C: Bremszylinderdruck
- A: Referenzdruck
- S: Steuerdruck
- R: Vorratsdruck
- O: Umgebungsdruck
- X: maximaler Differenzdruck
- H: Höchstdruckbegrenzung
- E: Steuerventileinstellung

## Patentansprüche

1. Pneumatisches Steuerventil in Kombination mit einem Umstellerventil (14) als Stellglied für eine geregelte Druckluftbeaufschlagung mindestens eines an einem Ventilgehäuse (1) über einen C-Port (7) anschließbaren Bremszylinders (8) nach Maßgabe einer Druckdifferenz zwischen einem per S-Port (3) zugeführten Steuerdruck und per A-Port (4) zugeführtem entgegengesetzt auf einen Steuerkolben (2) wirkenden Referenzdruck, der im Zusammenwirken mit mindestens einer Druckfeder (5) ein Doppelsitzventil (6) betätigt, um entweder zur Entlüftung den C-Port (7) mit einem O-Port (9) oder zur Belüftung den C-Port (7) mit einem R-Port (10) zu verbinden, wobei mehrere zusätzliche mit dem Steuerkolben (2) zusammenwirkende alternativ auswählbare C-Kolben (12a,12b) zur Einstellung mehrerer Bremsdruckniveaus vorgesehen sind, wobei an der das Doppelsitzventil (6) betätigenden Kolbenstange (11) ein erster C-Kolben (12a) kleineren Durchmessers mit zugeordnetem C1-Port (13a) beabstandet von einem zweiten C-Kolben (12b) größeren Durchmessers mit zugeordnetem C2-Port (13b) angeordnet ist, wobei ein erstes Bremsdruckniveau durch Beaufschlagung des ersten C-Kolbens (12a) mit Bremszylinderdruck, ein zweites Bremsdruckniveau durch Beaufschlagung des zweiten C-Kolbens (12b) mit Bremszylinderdruck und ein drittes Bremsdruckniveau durch Beaufschlagung beider C-Kolben (12a, 12b) mit Bremszylinderdruck einstellbar ist,
**dadurch gekennzeichnet, dass** das Umstellerventil (14) zum Auswählen eines der Bremsdruckniveaus durch Zu- und Abschalten einzelner Teilflächen der C-Kolben (12a, 12b) konfiguriert ist.

2. Pneumatisches Steuerventil nach Anspruch 1,
**dadurch gekennzeichnet, dass** das Umstellerventil (14) eingangsseitig am C-Port (7) zur Bereitstellung des Bremszylinderdrucks angeschlossen ist und über drei Schaltstellungen die drei Bremsdruckniveaus durch ausgangsseitigen Anschluss an den C1-Port (13a) und C2-Port (13b) herstellt.

3. Pneumatisches Steuerventil nach Anspruch 1 oder 2,
**dadurch gekennzeichnet, dass** das Umstellerventil (14) nach Art eines 3/3-Wege-Schieberventils ausgebildet ist.

4. Pneumatisches Steuerventil nach Anspruch 1,
**dadurch gekennzeichnet, dass** der C1-Port (13a) den ersten C-Kolben (12a) in entgegengesetzter Wirkrichtung beaufschlagt, wie der über den S-Port (3) zugeführte Steuerdruck den Steuerkolben beaufschlagt, und dass der C2-Port (13b) den zwischen den beiden C-Kolben (12a,12b) gebildeten Raum beaufschlagt, und dass an der verbleibenden Seite des zweiten C-Kolbens (22b) Umgebungsdruck anliegt.

5. Pneumatisches Steuerventil nach Anspruch 1,
**dadurch gekennzeichnet, dass** zur Druckbegrenzung des Bremszylinderdrucks in jedem der unterschiedlichen Druckbremsniveaus der Steuerkolben (2) über eine Druckfeder (15) mit der das Doppelsitzventil (2) endseitig betätigenden und die C-Kolben (12a, 12b) tragenden Kolbenstange (11) verbunden ist.

6. Pneumatisches Steuerventil nach Anspruch 5,
**dadurch gekennzeichnet, dass** die Druckfeder (15) in einem am Steuerkolben (2) angeordneten Käfig (16) untergebracht ist, so dass diese mit der einen Stirnseite am Steuerkolben (2) zur Anlage kommt, deren andere Stirnseite an einer im Käfig (16) untergebrachten Anschlagplatte (18) anliegt, wovon die Kolbenstange (11) ausgehend sich in Richtung Doppelsitzventil (9) erstreckt.

7. Pneumatisches Steuerventil nach Anspruch 5,
**dadurch gekennzeichnet, dass** zur Einstellung der Druckbegrenzung eine im Steuerkolben (2) eingeschraubte Einstellschraube (17) vorgesehen ist, die am steuerkolbenseitigen Ende auf die Druckfeder wirkt.

8. Pneumatisches Steuerventil nach Anspruch 7,
**dadurch gekennzeichnet, dass** die Einstellschraube (17) von der den Referenzdruck vom A-Port (4) einhaltenden Raum des Ventilgehäuses (1) und von außen her über eine Verschlusskappe (19) zugänglich manuell verstellbar ist.

9. Schienenfahrzeug mit einem pneumatischen Bremssystem, umfassend mindestens ein pneumatisches Steuerventil nach einem der vorstehenden Ansprüche.

## Claims

1. Pneumatic control valve combined with a reversing valve (14) as an actuator for a controlled application of compressed air to at least one brake cylinder (8) connectable to a valve housing (1) via a C-port (7) in accordance with a pressure differential between a control pressure supplied per S-port (3) and a reference pressure supplied per A-port and acting on a control piston (2) in the opposite direction, the reference pressure actuating, while acting together with at least one compression spring (5), a double-seat valve (6) for connecting the C-port (7) either to an O-port (9) for venting the C-port (7) or to an R-port (10) for ventilation, wherein several additional C-pistons (12a, 12b) acting together with the control piston (2) and alternatively selectable are provided for setting several brake pressure levels, wherein there is provided on the piston rod (11) actuating the double-seat valve (6) a first C-piston (12a) of a smaller diameter with an associated C1-port (13a) arranged at a distance from a second C-piston (12b) of a larger diameter with an associated C2-port (13b), wherein a first brake pressure level can be set by applying brake cylinder pressure to the first C-piston (12a), a second brake pressure level by applying brake cylinder pressure to the second C-piston (12b) and a third brake pressure level by applying brake cylinder pressure to both C-pistons (12a, 12b),
**characterised in that** the reversing valve (14) is configured for selecting one of the brake pressure levels by selecting and deselecting individual part-surfaces of the C-pistons (12a, 12b).

2. Pneumatic control valve according to claim 1,
**characterised in that** the reversing valve (14) is connected on the inlet side to the C-port (7) for providing the brake cylinder pressure and provides the three brake pressure levels via three switching positions by outlet-side connection to the C1-port (13a) and the C2-port (13b).

3. Pneumatic control valve according to claim 1 or 2,
**characterised in that** the reversing valve (14) is designed in the manner of a 3/3-way spool valve.

4. Pneumatic control valve according to claim 1,
**characterised in that** the C1-port (13a) applies pressure to the first C-piston (12a) in the direction opposite to that in which the control pressure supplied via the S-port (3) is applied to the control piston, and **in that** the C2-port (13b) applies pressure to the space formed between the two C-pistons (12a, 12b), and **in that** ambient pressure is applied to the remaining side of the second C-piston (22b).

5. Pneumatic control valve according to claim 1,
**characterised in that,** for limiting the brake cylinder pressure in each of the various brake pressure levels, the control piston (2) is connected via a compression spring (15) to the piston rod (11), which actuates the end-side of the double-seat valve (2) and supports the C-pistons (12a, 12b).

6. Pneumatic control valve according to claim 5,
**characterised in that** the compression spring (15) is accommodated in a cage (16) located on the control piston (2), so that one of its end faces comes into contact with the control piston (2) and its other end face bears against a stop plate (18) located in the cage (16), from where the piston rod (11) extends towards the double-seat valve (9).

7. Pneumatic control valve according to claim 5,
**characterised in that,** for setting the pressure limit, an adjusting screw (17) screwed into the control piston (2) and acting on the compression spring at the control piston-side end is provided.

8. Pneumatic control valve according to claim 7,
**characterised in that** the adjusting screw (17) is adjustable from the chamber of the valve housing (1) which maintains the reference pressure of the A-port (4) and, in addition, manually from the outside via a cap (19).

9. Rail vehicle with a pneumatic brake system, comprising at least one pneumatic control valve according to any of the preceding claims.

## Revendications

1. Soupape de commande pneumatique en combinaison avec une soupape (14) inverseuse comme actionneur d'une alimentation en air comprimé régulée d'au moins un cylindre (8) de frein, pouvant être raccordé à un corps (1) de soupape par un orifice C (7), en fonction d'une différence de pression entre une pression de commande appliquée par un orifice S (3) et une pression de référence appliquée par un orifice A (4) et agissant en sens contraire sur un piston (2) de commande, lequel, en coopération avec au moins un ressort (5) de compression, actionne une soupape (6) à deux sièges pour mettre, pour la purge, l'orifice C (7) en communication avec un orifice O (9) ou, pour l'alimentation en air, l'orifice C (7) avec un orifice R (10), plusieurs pistons C (12a, 12b) supplémentaires, pouvant être choisis en alternance et coopérant avec le piston (2) de commande, étant prévus pour établir plusieurs niveaux de pression de freinage, dans laquelle, sur la tige (11) de piston actionnant la soupape (6) à deux sièges, est monté un premier piston C (12a) de diamètre plus petit et ayant un orifice C1 (13a) associé, en étant à distance d'un deuxième piston C (12b) de diamètre plus grand et ayant un orifice C2 (13b) associé, un premier niveau de pression de freinage étant réglable en alimentant le premier piston C (12a) en la pression du cylindre de frein, un deuxième niveau de pression de freinage en alimentant le deuxième piston C (12b) en la pression du cylindre de frein et un troisième niveau de freinage en alimentant les deux pistons C (12a, 12b) en la pression du cylindre de frein,
**caractérisée en ce que** la soupape (14) inverseuse est configurée pour choisir l'un des niveaux de pression en connectant et en déconnectant des surfaces partielles individuelles des pistons C (12a, 12b).

2. Soupape de commande pneumatique suivant la revendication 1, **caractérisée en ce que** la soupape (14) inverseuse est raccordée, du côté de l'entrée, à l'orifice C (7) pour mettre à disposition la pression du cylindre de frein et donne, par trois positions de commutation, les trois niveaux de pression de freinage par raccord du côté de la sortie à l'orifice C1 (13a) et à l'orifice C2 (13b).

3. Soupape de commande pneumatique suivant la revendication 1 ou 2,
**caractérisée en ce que** la soupape (14) inverseuse est constituée à la manière d'un distributeur 3/3 voies.

4. Soupape de commande pneumatique suivant la revendication 1, **caractérisée en ce que** l'orifice C1 (13a) alimente le premier piston C (12a) dans un sens opposé à celui suivant lequel la pression de commande, apportée par l'orifice S (3), est appliquée au piston de commande et **en ce que** l'orifice C2 (13b) alimente l'espace formé entre les deux pistons C (12a, 12b) et **en ce que**, du côté restant du deuxième piston C (22b), s'applique la pression atmosphérique.

5. Soupape de commande pneumatique suivant la revendication 1, **caractérisée en ce que**, pour limiter la pression du cylindre de frein, dans chacun des niveaux de pression de freinage, le piston (2) de commande est relié, par un ressort (15) de compression, à la tige (11) de piston actionnant, du côté de l'extrémité, la soupape (2) à deux sièges et portant les pistons C (12a, 12b).

6. Soupape de commande pneumatique suivant la revendication 5, **caractérisée en ce que** le ressort (15) de compression est logé dans une cage (16) montée sur le piston (2) de commande, de manière à venir en contact avec l'un des côtés frontaux du piston (2) de commande, tandis que l'autre côté frontal s'applique à une plaque (18) de butée, logée dans la cage (16), à partir de laquelle la tige (11) de piston s'étend, en sortant, en direction de la soupape (9) à deux sièges.

7. Soupape de commande pneumatique suivant la revendication 5, **caractérisée en ce que**, pour régler la limitation de pression, est prévue une vis (17) de réglage, qui est vissée dans le piston (2) de commande et qui agit à l'extrémité, du côté du piston de commande, sur le ressort de compression.

8. Soupape de commande pneumatique suivant la revendication 7, **caractérisée en ce que** la vis (17) de réglage est réglable en étant accessible manuellement par l'espace, comportant la pression de référence de l'orifice A (4), et de l'extérieur par une coiffe (19) de fermeture.

9. Véhicule ferroviaire ayant un système de freinage pneumatique comprenant au moins une soupape de commande pneumatique suivant l'une des revendications précédentes.
